Europäisches Patentamt

European Patent Office

Office européen des brevets

(19)

(11) Veröffentlichungsnummer: **0 277 525**
**A2**

(12) **EUROPÄISCHE PATENTANMELDUNG**

(21) Anmeldenummer: 88100550.8

(22) Anmeldetag: 16.01.88

(51) Int. Cl.⁴: **G05D 16/20** , F16K 31/06

(30) Priorität: 31.01.87 DE 3702958

(43) Veröffentlichungstag der Anmeldung:
10.08.88 Patentblatt 88/32

(84) Benannte Vertragsstaaten:
AT BE CH DE ES FR GB IT LI NL SE

(71) Anmelder: **Drägerwerk Aktiengesellschaft**
**Moislinger Allee 53-55**
**D-2400 Lübeck 1(DE)**

(72) Erfinder: **Maurer, Christoph, Dipl.-Ing.**
**Rohlsdorfer Weg 21**
**D-2409 Techau(DE)**

(54) **Druckminderer mit regelbarem Auslassdruck.**

(57) Ein Druckminderer, dessen Auslaßdruck über einen Soll-Istwert-Vergleich regelbar ist, zeichnet sich dadurch aus, daß sein Sollwert einfach wählbar ist und unabhängig von Veränderungen des Durchflusses oder Eingangsdruckes eingehalten wird. Dies wird dadurch erreicht, daß das Regulierelement (22, 25) mit einer Antriebsvorrichtung (26) versehen und die Regeleinheit (13) mit der Antriebsvorrichtung (26) zur Betätigung des Regulierelements (22, 25) durch ein aus dem Vergleich zwischen dem Drucksollwert und dem gemessenen Auslaßdruck ermitteltes Reguliersteuersignal über eine Steuerleitung (33) verbunden ist.

## Druckminderer mit regelbarem Auslaßdruck

Die Erfindung betrifft einen Druckminderer mit einer Einlaßkammer, die an eine Auslaßkammer über ein Ventil verbindbar ist, das durch ein Kopplungselement betätigbat ist, welches an eine die Auslaßkammer gegenüber der Umgebung abschließende druckempfindliche Membran befestigt ist, wobei ein auslaßseitig angeordneter Druckaufnehmer mit einer Regeleinheit verbunden ist, über die das Kopplungselement durch eine Verschiebeeinrichtung entsprechend einem aus dem Vergleich zwischen gemessenem Auslaßdruck und einem der Regeleinheit vorgebbaren Drucksollwert gewonnenen Verschiebesteuersignal bewegbar ausgebildet ist und die Verschiebeeinrichtung durch ein in seiner Vorspannkraft veränderliches federelastisches Regulierelement einstellbar ist.

Ein derartiger Druckminderer ist aus der US-A-3 811 465 bekanntgeworden.

Bei dem bekannten Druckminderer wird das Ventil durch ein eine Grundspannung vorgebendes federlastisches Regulierelement in Form einer einstellbaren Justierfeder und eine als Tauchspule ausgebildete Verschiebbeinrichtung so weit geöffnet, bis ein Gleichgewicht zwischen dem vorgegebenen Auslaßdruck, der in der Auslaßkammer auf die Membran einwirkt, und der auf die Membran von der Justierfeder und Tauchspule ausgeübten Gegenkraft besteht. Der auslaßseitige Druck wird von der Regeleinheit ständig überwacht und durch Abgabe eines Steuersignals an die Tauchspule auf dem Sollwert gehalten. Wenn die Kraft des auslaßseitigen Druckes auf die Membran im Gleichgewicht zu der entgegengerichteten Kraft von Justierfeder und Tauchspule steht, ist auch die Regelstrecke im Gleichgewicht, so daß das Ventil in einer mittleren Gleichgewichtslage verharrt. Der Tauchspulenantrieb ist nur dann stromlos, wenn die Vorspannkraft des Regulierelements mit der vom Auslaßdruck hervorgerufenen Kraft auf die Membran im Gleichgewicht steht, also nur bei einem einzigen Sollwert.

Bei dem bekannten Druckminderer ist es von Nachteil, daß eine Änderung des gewünschten Auslaßdruckes durch Verstellung des Regulierelements allein nicht möglich ist. Denn eine Änderung der Vorspannkraft des Regulierelements würde durch die Regeleinheit kompensiert und bliebe ohne Einfluß auf den Auslaßdruck. Außerdem ist das Regulierelement nur für Justierzwecke vorgesehen und besitzt lediglich eine begrenzte Verstellmöglichkeit. Ferner ist bei einer von Hand sowohl am Regulierelement als auch an der Sollwerteingabe der Regeleinheit durchgeführten gleichzeitigen Verstellung nur schwer eine Übereinstimmung der beiden eingestellten Werte zu erreichen. Die Abweichungen aber führen zu einer Kompensation durch die Regeleinheit und Belastung des Tauchspulenantriebs. Sollwertveränderungen können daher nur elektrisch erfolgen, indem die Tauchspule mit einem Dauerstrom versorgt wird, derart, daß sich ein neues, dem veränderten Sollwert entsprechendes Gleichgewicht einstellt. Der so einstellbare Bereich von Sollwerten ist eingegrenzt durch die maximale Kraft des Tauchspulenantriebs.

Der bekannte Druckminderer kann daher nur in einem engen Bereich von Sollwerten eingesetzt werden, will man nicht einen unnötig großen, unnötig Energie verbrauchenden Antrieb einsetzen.

Schließlich wirken auch bei unverändertem Sollwert weitere Kräfte auf das beschriebene Gleichgewicht an der Membran ein, wenn sich z.B. zu unterschiedlichen Durchflüssen entsprechende unterschiedliche Hübe des · Ventils einstellen. Gemäß der Federcharakteristik ergeben sich dabei unterschiedliche Federkräfte. Auch unterschiedliche Zuflußdrücke, die von der Einlaßkammer her auf das Ventil einwirken, führen zu ähnlichen Störkräften, die bei dem bekannten Druckminderer nur durch den Tauchspulenantrieb kompensiert werden können.

Der Erfindung liegt somit die Aufgabe zugrunde, einen Druckminderer der genannten Art so zu verbessern, daß der Sollwert für den Auslaßdruck einfach wählbar ist und der gewählte Sollwert unabhängig von starken Veränderungen sowohl des Durchflusses wie des Eingangsdruckes eingehalten wird.

Die Aufgabe wird dadurch gelöst, daß das Regulierelement mit einer Antriebsvorrichtung versehen und die Regeleinheit mit der Antriebsvorrichtung zur Betätigung des Regulierelements über eine Steuerleitung verbunden ist. Über diese Steuerleitung erfolgt die Einstellung einer neuen Ruhelage durch Vergleich zwischen dem gemessenen Auslaßdruck und dem Sollwert.

Die Regeleinheit besitzt nunmehr neben der Steuerleitung für die Verschiebeeinrichtung eine zweite Steuerleitung für das Regulierelement. Beide werden in Abhängigkeit voneinander betätigt, und zwar werden Signale unterhalb einer Grenze, die von der Verschiebeeinrichtung noch ohne Schwierigkeiten bewältigt werden können, der Verschiebeeinrichtung zugeleitet. Signale, die diese Grenze überschreiten, werden jedoch über die zweite Steuerleitung an die Antriebsvorrichtung des Regulierelements gegeben und in eine Verstellung der Federspannung umgesetzt. Dies gilt für Signale aus Sollwert/Istwert-Abweichungen der verschiedenen Ursachen gleichermaßen, einerlei, ob sie durch wechselnden Zuflußdruck, Änderungen der Durchflußleistung oder Neueinstellungen des Sollwertes hervorgerufen werden. Dadurch ist erreicht, daß die Verschiebeeinrichtung nur für den begrenzten Bereich einer Feinregelung herangezogen wird, während weitergehende Kompensationen in ökonomischer Weise durch Korrektur des Gleichgewichtspunkes mittels Federverstellung durchgeführt werden. Somit erhält man einen Druckminderer, dessen Sollwert in weiten Grenzen durch einfache Sollwerteingabe an der Regeleinheit vorgewählt werden kann und dessen Abweichungen des Auslaßdrucks vom eingestellten Sollwert mit geringem Energieaufwand genauestens korrigiert werden.

Eine besonders zweckmäßige Ausführung des Regulierelements besteht aus einem Gewindestift, der mit seinem einen Ende mit einer die Verschiebeeinrichtung angreifenden Feder verbunden und an seinem anderen Ende mit der an die Steuerleitung angeschlossenen Antriebsvorrichtung versehen ist. Die Steuereinheit veranlaßt bei entsprechender Abweichung des Istwertes vom eingestellten Sollwert die Antriebsvorrichtung, den Gewindestift so lange zu verdrehen, bis die an die Verschiebeeinrichtung angreifende Federkraft die Gleichgewichtsposition der Membran erreicht hat.

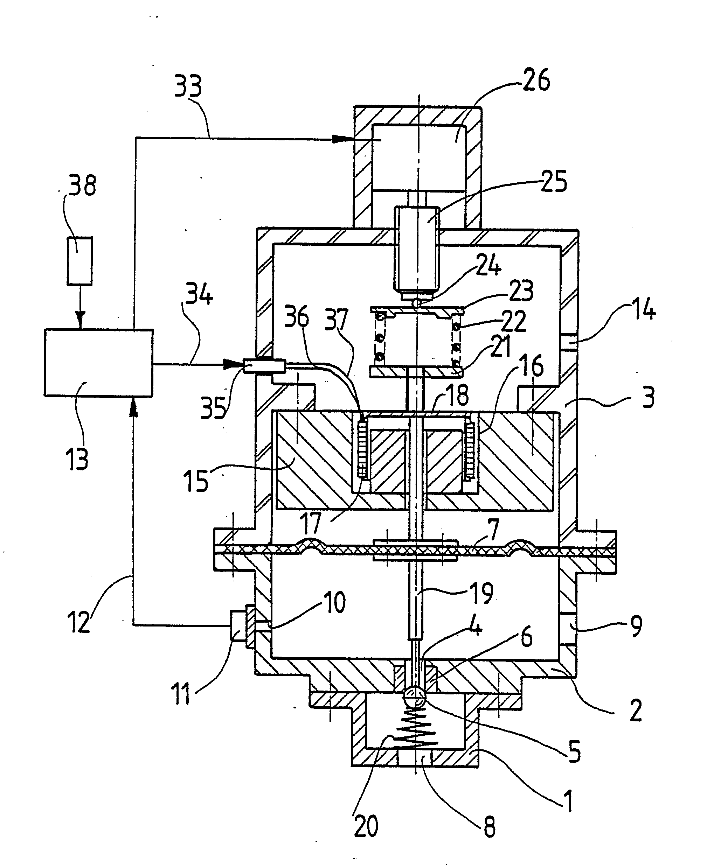

Ein Ausführungsbeispiel der Erfindung ist in der Zeichnung schematisch dargestellt und wird im folgenden näher erläutert.

Die einzige Figur zeigt den Druckminderer, der aus drei Gehäuseteilen besteht: Der Einlaßkammer (1), der Auslaßkammer (2) und der Steuerkammer (3). In der Verbindungswand zwischen Einlaßkammer (1) und Auslaßkammer (2) ist ein Durchlaß (4) angebracht, welcher mit einem Kugelventil (5, 6) verschließbar ist. Auslaßkammer (2) und Steuerkammer (3) sind mit einer Membran (7) voneinander abgetrennt, welche mit bekannten Mitteln zwischen den Rändern der beiden Kammers (2, 3) eingespannt ist. Die Einlaßkammer (1) besitzt eine Einlaßöffnung (8) und die Auslaßkammer (2) eine Auslaßöffnuf (9). Über eine Meßöffnung (10) ist ein Drucksensor (11) angeordnet, dessen Sensorleitung (12) mit einer Regeleinheit (13) verbunden ist. In der über eine Öffnung (14) mit der Umgebung verbundenen Steuerkammer (3) ist ein Permanentmagnet (15) befestigt, der in seinem zentralen Bereich eine Ausnehmung (16) aufweist, in der eine als Verschiebeelement dienende Tauchspule (17) axial bewegbar auf einem Träger (18) befestigt ist. Der Träger (18) der Tauchspule (17) ist über einen Stift (19) mit der Membran (7) verbunden, wobei die Spitze des Stiftes (19) als Kopplungselement die Kugel (5) des Kugelventils (5, 6) berührt, welche über eine Kegelfeder (20) abgestützt wird. Das andere Ende des Stiftes (19) ist mit einer Tellerscheibe (21) abgeschlossen, auf welcher eine Schraubenfeder (22) aufsitzt, die mit einem Halter (23) eingespannt wird, der über eine Lagerkugel (24) an einen Gewindestift (25) drückt, welcher eine Wand des Steuergehäuses (3) durchdringt. Kugel (5), Stift (19), Feder (22) und Gewindestift (25) sind axial zueinander ausgerichtet. Der Gewindestift (25) ist kraftschlüssig mit einer Antriebsvorrichtung (26) verbunden. Gewindestift (25) und die eingespannte Feder (22) bilden zusammen mit der Antriebsvorrichtung (26) das Regulierelement, mit welchem die Vorspannkraft der Tauchspule (17) einstellbar ist.

Der durch den Druckminderer einzuregelnde Sollwert kann an der Regeleinheit (13) durch entsprechende Eingabe (38) über ein Tastenfeld vorgegeben werden. Die Regeleinheit (13) ist zur Übertragung eines Reguliersteuersignals an die Antriebsvorrichtung (26) mit einer Steuerleitung (33) verbunden. Zur Übertragung des Verschiebsteuersignals ist die Regeleinheit (13) über eine Signalleitung (34), eine Durchführung (35) und die Anschlußleitungen (36, 37) mit der Tauchspule (17) verbunden.

Zum Betrieb wird der gewünschte (oder während des Betriebes ggf. ein geänderter) Sollwert an der Regeleinheit (13) eingegeben (38). Unter der Kraft der Feder (22) hebt sich die Kugel (5) von ihrem Sitz (6), und es strömt Gas über die Einlaßöffnung (8) in die Einlaßkammer (1) durch das Ventil in die Auslaßkammer (2) zur Auslaßöffnung (9) zu einem nicht dargestellten Verbraucher. Der Auslaßdruck in der Auslaßkammer (2) stellt sich zunächst so ein, daß die durch ihn auf die Membran (7) wirkende Kraft im Gleichgewicht zu der von der Feder (22) auf die Membran (7) wirkenden Kraft steht. Der Auslaßdruck wird über den Drucksensor (11) gemessen und als Istwert an die Regeleinheit (13) weitergegeben. Diese bildet aus Vergleich von Sollwert und Istwert ein Verschiebesteuersignal, welches über die Signalleitung (34) der Tauchspule (17) in Form eines Stromes zugeführt wird. Die von der Tauchspule (17) dadurch erzeugte Kraft wird je nach Stromrichtung zu der von der Feder erzeugten Kraft addiert oder von ihr subtrahiert, und zwar so, daß Istwert und Sollwert un Übereinstimmung kommen.

Sollte der Druck in der Auslaßkammer (2) aufgrund äußerer Betriebsbedingungen derart vom Sollwert abweichen, daß das Verschiebesteuersignal keine genügend hohe Gegenkraft durch die Tauchspule (17) bewirken kann, wird von der Regeleinheit (13) über die Steuerleitung (33) ein Reguliersteuersignal an das Regulierelement (22, 25, 26) abgegeben, worauf die Antriebsvorrichtung (26) die Vorspannkraft der Feder (22) über eine entsprechende Drehung des Gewindestiftes (25) verändert, bis das Gleichgewicht zwischen Schließkraft auf die Membran (7) und Öffnungskraft durch den Stift (19) wieder hergestellt ist. Die weitere Überwachung des Gleichgewichtszustandes erfolgt danach wieder durch Nachregelung der Tauchspule (17).

## Ansprüche

1. Druckminderer mit einer Einlaßkammer, die an eine Auslaßkammer über ein Ventil verbindbar ist, das durch ein Kopplungselement betätigbar ist, welches an eine die Auslaßkammer gegenüber der Umgebung abschließende druckempfindliche Membran befestigt ist, wobei ein auslaßseitig angeordneter Druckaufnehmer mit einer Regeleinheit verbunden ist, über die das Kopplungselement durch eine Verschiebeeinrichtung entsprechend einem aus dem Vergleich zwischen gemessenem Auslaßdruck und einem der Regeleinheit vorgebbaren Drucksollwert gewonnenen Verschiebesteuersignal bewegbar ausgebildet ist und die Verschiebeeinrichtung durch ein in seiner Vorspannkraft veränderliches federelastisches Regulierelement einstellbar ist, dadurch gekennzeichnet, daß das Regulierelement (22,25) mit einer Antriebsvorrichtung (26) versehen und die Regeleinheit (13) mit der Antreibsvorrichtung (26) zur Betätigung des Regulierelements (22, 25) durch ein aus dem Vergleich zwischen dem Drucksollwert und dem gemessenen Auslaßdruck ermitteltes Reguliersteuersignal über eine Steuerleitung (33) verbunden ist.

2. Druckminderer nach Anspruch 1, dadurch gekennzeichnet, daß das Regulierelement aus einem Gewindestift (25) besteht, der mit seinem einen Ende mit einer die Verschiebeeinrichtung (17) angreifenden Feder (22) verbunden und an seinem anderen Ende mit der an die Stuerleitung (33) angeschlossenen Antriebsvorrichtung (26) versehen ist.